# EUROPEAN PATENT APPLICATION

(11) **EP 4 657 878 A1**
(43) Date of publication of application: **03.12.2025**
(21) Application number: 25172837.4
(22) Date of filing: 28.04.2025
(51) Int. Cl.: H04Q 9/00, A61B 5/00, A61N 1/372

(54) **TELEMETRY COMMUNICATION SYSTEM**

(30) Priority: 30.05.2024 US 202418678665
(71) Applicant: Schneider Electric Systems USA, Inc., Foxborough, MA 02035 (US)
(72) Inventor: REDMOND, James, Richmond, K0A2Z0 (CA); SOBIN, Zackery, Tryon, 28782 (US)
(74) Representative: Friese Goeden Patentanwälte PartGmbB

(57) **Abstract**

A telemetry communication system is configured for conserving power of telemetry devices of an industrial plant. The telemetry communication system comprises an external plant device and at least one of a telemetry communication device and an outstation. The telemetry communication device and outstation are configured to activate a primary communication system and a secondary communication system. The primary communication system is configured for executing a primary communication method comprising a low power communication methodology and a low bandwidth communication methodology for communicating with the external plant device. The secondary communication system is configured for executing a secondary communication method comprising a high power communication methodology and a high bandwidth communication methodology for communicating with the external plant device. Each of the telemetry communication device and outstation are configured to determine whether to use the primary or secondary communication system for communicating with the external plant device based on an event.

## Description

### CROSS-REFERENCE TO RELATED APPLICATIONS

This application claims priority from United States Patent Application No. 18/678,665 filed on May 30, 2024.

### FIELD

The present disclosure generally relates to telemetry communication systems associated with industrial plants.

### BACKGROUND

Telemetry communication systems are used to monitor and control field operations across widely dispersed infrastructure of industrial plants. Particularly, telemetry communication systems enable industrial plant devices to automatically measure and transmit data from remote sources. Typically, such devices are low powered devices, relying often on solar and/or battery power.

### SUMMARY

Aspects of the present disclosure provide systems and methods for conserving power of telemetry devices within an industrial plant.

In one aspect, a telemetry communication system for an industrial plant comprises an external plant device. An outstation comprises a primary communication system and a secondary communication system. The primary communication system is configured for executing a primary communication method comprising at least one of a low power communication methodology and a low bandwidth communication methodology for communicating with the external plant device. The secondary communication system is configured for executing a secondary communication method comprising at least one of a high power communication methodology and a high bandwidth communication methodology for communicating with the external plant device.

In another aspect, a telemetry communication device for an industrial plant comprises a primary communication system configured for executing a primary communication method comprising at least one of a low power communication methodology and a low bandwidth communication methodology for communicating with an external plant device. The telemetry communication device is configured to access a secondary communication system configured for executing a high power communication method comprising at least one of a high power communication methodology and a high bandwidth communication methodology for communicating with the external plant device.

In another aspect, a method for communicating with an external plant device of an industrial plant comprises receiving, at a telemetry device for the industrial plant, an input indicative of requiring a primary communication method or secondary communication method for communicating with the external plant device. One of a primary communication system comprising the primary communication method or a secondary communication system comprising the secondary communication method is activated at the telemetry device based on the input to communicate with the external plant device.

Other objects and features will be in part apparent and in part pointed out hereinafter.

### BRIEF DESCRIPTION OF THE DRAWINGS

FIG. 1 is a schematic block diagram of a telemetry communication system for an industrial plant, according to an embodiment.
FIG. 2 is a schematic block diagram of another embodiment of the telemetry communication system shown in FIG. 1.
FIG. 3 is flow chart of an exemplary method for communicating with an external plant device of the industrial plant, according to an embodiment.

Corresponding reference characters indicate corresponding parts throughout the drawings.

### DETAILED DESCRIPTION

The present disclosure provides an improved framework for conserving power of telemetry devices associated with one or more industrial plants. Telemetry devices including local and remote telemetry devices, are critical components of industrial plants, as they are configured for monitoring and transmitting plant operation data. Broadly, telemetry devices comprise recording or control devices. Remote telemetry devices are generally low powered devices, relying often on solar and/or battery power. Accordingly, it is crucial to conserve the power of remote telemetry devices to maintain normal plant operations. As will be explained in greater detail below, systems and methods in accordance with the present disclosure provide a communication system optimizing power conservation for telemetry devices of an industrial plant.

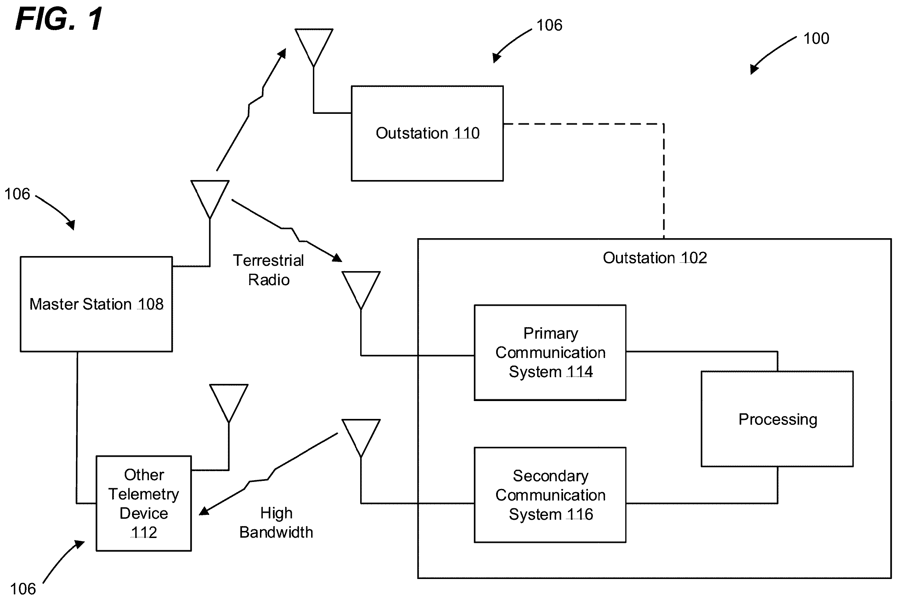

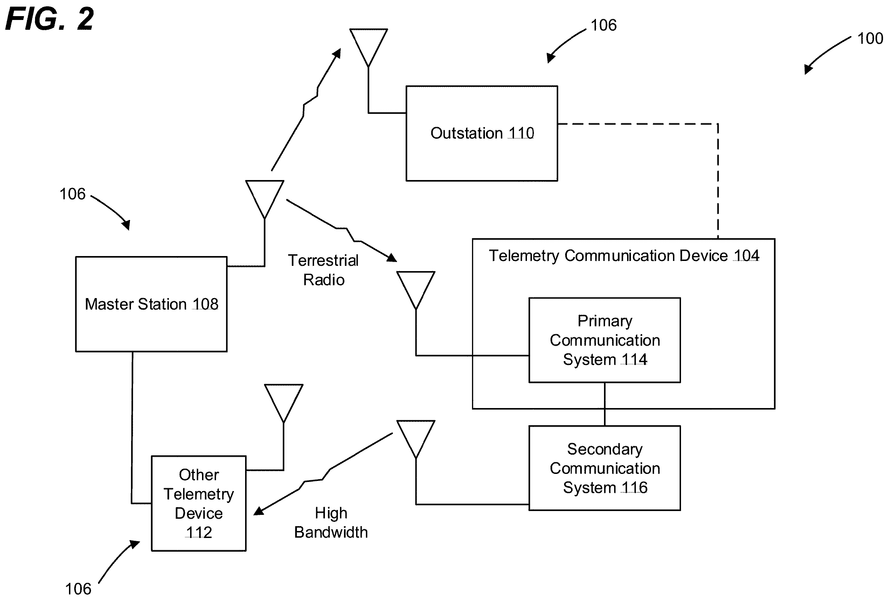

Referring now to FIGS. 1-2, an exemplary embodiment of a telemetry communication system for one or more industrial plants is generally indicated at reference number 100. The telemetry communication system 100 optimizes communications between devices associated with the one or more industrial plants to conserve power of the devices. The telemetry communication system 100 comprises telemetry devices (e.g., local and remote) such as an outstation 102, a telemetry communication device 104 and an external plant device 106 (e.g., a telemetry device such as a local or remote telemetry device that is separate from the outstation and telemetry communication device). Each of the outstation 102 and telemetry communication device 104 are configured to execute either a primary communication method comprising a low power and low bandwidth communication methodology or a secondary communication method comprising a high power and high bandwidth communication methodology for communicating with one or more external plant devices 106. Individual components of the telemetry communication system 100 will now be described before turning to an exemplary communication method.

The external plant device 106 is a telemetry device (e.g., local or remote) configured for data collection and transmission. For example, the external plant device 106 comprises a master outstation 108, an additional outstation 110, another telemetry device 112, or a Supervisory Control and Data Acquisition (SCADA) system associated with one or more industrial plants. The external plant device 106 is configured to communicate with local and remote telemetry devices associated with the one or more industrial plants such as the outstation 102 and the telemetry communication device 104 to exchange plant information. For example, the external plant device 106 is configured to exchange operations data and transmit updates to the outstation 102 and telemetry communication device 104.

The outstation 102 comprises a primary communication system 114 and a secondary communication system 116. The primary communication system 114 is configured for executing the primary communication method comprising at least one of a relatively low powered communication methodology and a relatively low bandwidth communication methodology for communicating with one or more of the external plant devices 106. In one example, the primary communication system comprises a land-based data radio, but it is contemplated that other low rate telemetry devices may be used without departing from the scope of the present disclosure. Moreover, in one embodiment, the primary communication method comprises one of terrestrial radio broadcasting, Long Term Evolution Machine Type Communication (LTE-M), or other technologies such as those used now by AM or FM radio. However, it is envisioned that other modulation techniques may be used as the primary communication method without departing from the scope of the present disclosure.

The secondary communication system 116 is configured for executing the secondary communication method comprising at least one of a relatively high power communication methodology and a relatively high bandwidth communication methodology for communicating with one or more of the external plant devices 106. In one embodiment, the secondary communication system comprises a cell modem, but it is contemplated that other high rate telemetry devices may be used without departing from the scope of the present disclosure. In one embodiment, the secondary communication method comprises Long Term Evolution (LTE). However, it is envisioned that other modulation techniques may be used as the secondary communication method without departing from the scope of the present disclosure.

Upon an event, the outstation 102 is configured to determine whether to use the primary communication system 114 or the secondary communication system 116 to communicate with one or more of the external plant devices 106. Preferably, the primary communication system 114 will be the first line communication system for executing communication tasks, while the secondary communication system 116 will only be activated if necessary. For example, the secondary communication system 116 will remain in a sleep mode or powered off until the outstation 102 determines the secondary communication system 116 is required for a communication task. Generally, the outstation 102 will determine to use the primary communication system 114 for executing low power, low bandwidth communication tasks, and the secondary communication system 116 for executing high power, high bandwidth tasks. Examples of low power, low bandwidth communication tasks include but are not limited to small data transmission and reception such as status reports. Examples of high power, high bandwidth communication tasks include but are not limited to large data transmission and reception such as firmware updates and historical data reports.

In one embodiment, the event comprises the outstation 102, receiving as an input, a schedule indicative of a first predetermined time allotted for the primary communication system 114 to execute the primary communication method to complete the low power, low bandwidth communication tasks and a second predetermined time allotted for the secondary communication system 116 to execute the secondary communication method to complete the high power, high bandwidth communication tasks. For example, the first predetermined time may correspond to a time when the outstation 102 and components thereof are not connected to a power source, and the second predetermined time may correspond to a time when the outstation and components thereof are connected to a power source. Alternatively, the first predetermined time may correspond to normal operating hours for one or more industrial plants, and the second predetermined time may correspond to non-operating hours for the one or more industrial plants.

In another embodiment, the event comprises the outstation 102 receiving an input indicative of requiring the primary communication method or secondary communication method, from the external plant device 106. In other words, the external plant device 106 will send instructions to the outstation 102 instructing the outstation to use one of the primary communication system 114 or secondary system 116 to communicate with the external plant device.

The telemetry communication device 104 comprises the primary communication system 114 and is configured to access the secondary communication system 116 from another telemetry device comprising the secondary communication system (e.g., an outstation). As explained above, the primary communication system 114 is configured for executing the primary communication method comprising at least one of the low powered communication methodology and the low bandwidth communication methodology for communicating with one or more of the external plant devices 106. In one example, the primary communication system comprises a land-based data radio, but it is contemplated that other low rate telemetry devices may be used without departing from the scope of the present disclosure. Moreover, in one embodiment, the primary communication method comprises one of terrestrial radio broadcasting, Long Term Evolution Machine Type Communication (LTE-M), or other technologies such as those used now by AM or FM radio. However, it is envisioned that other modulation techniques may be used as the primary communication method without departing from the scope of the present disclosure.

The secondary communication system 116 is configured for executing the secondary communication method comprising at least one of a high power communication methodology and a high bandwidth communication methodology for communicating with one or more of the external plant devices 106. In one embodiment, the secondary communication system comprises a cell modem, but it is contemplated that other high rate telemetry devices may be used without departing from the scope of the present disclosure. In one embodiment, the secondary communication method comprises Long Term Evolution (LTE). However, it is envisioned that other modulation techniques may be used as the secondary communication method without departing from the scope of the present disclosure.

Upon an event, the telemetry communication device 104 is configured to determine whether to use the primary communication system 114 or the secondary communication system 116 to communicate with one or more of the external plant devices 106. Preferably, the primary communication system 114 will be the first line communication system for executing communication tasks, while the secondary communication system 116 will only be activated if necessary. For example, the secondary communication system 116 will remain in a sleep mode or powered off until the telemetry communication device 104 determines the secondary communication system 116 is required for a communication task. Generally, the telemetry communication device 104 will determine to use the primary communication system 114 for executing low power, low bandwidth communication tasks, and the secondary communication system 116 for executing high power, high bandwidth tasks. Examples of low power, low bandwidth communication tasks include but are not limited to small data transmission and reception such as status reports. Examples of high power, high bandwidth communication tasks include but are not limited to large data transmission and reception such as firmware updates and historical data reports.

In one embodiment, the event comprises the telemetry communication device 104, receiving as an input, a schedule indicative of a first predetermined time allotted for the primary communication system 114 to execute the primary communication method to complete the low power, low bandwidth communication tasks and a second predetermined time allotted for the secondary communication system 116 to execute the secondary communication method to complete the high power, high bandwidth communication tasks. For example, the first predetermined time may correspond to a time when the telemetry communication device 104 and components thereof are not connected to a power source, and the second predetermined time may correspond to a time when the telemetry communication device and components thereof are connected to a power source. Alternatively, the first predetermined time may correspond to normal operating hours for one or more industrial plants, and the second predetermined time may correspond to non-operating hours for the one or more industrial plants.

In another embodiment, the event comprises the telemetry communication device 104 receiving an input indicative of requiring the primary communication method or secondary communication method, from the external plant device 106. In other words, the external plant device 106 will send instructions to the telemetry communication device 104 instructing the telemetry communication device to use one of the primary communication system 114 or secondary system 116 to communicate with the external plant device.

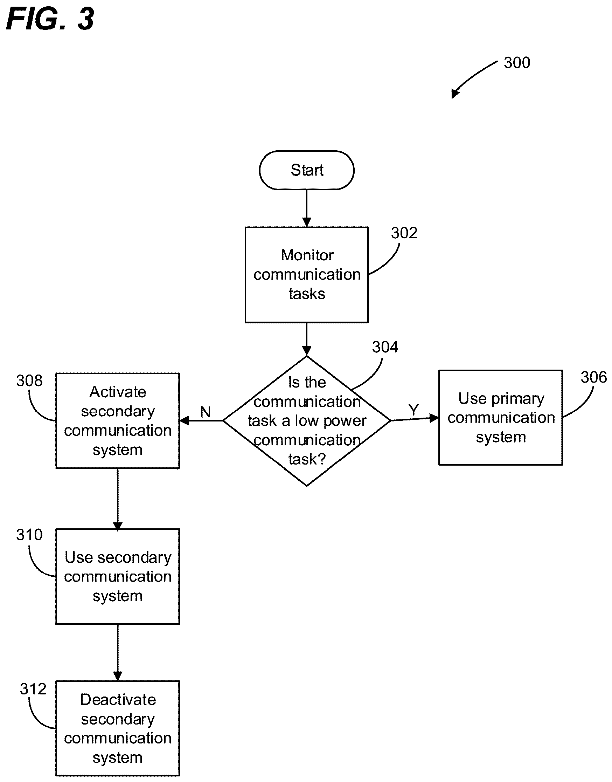

Referring now to FIG. 3, a method for communicating with an external plant device associated with an industrial plant is generally indicated at reference number 300. Initially a telemetry device such as an outstation or telemetry communication device is configured to monitor communication tasks from one or more external plant devices (step 302). To complete the communication task, the telemetry device at step 304 determines if the communication task is a low power, low bandwidth communication task or a high power, high bandwidth communication task. For example, the telemetry device receives an input (e.g., a communication task) indicative of requiring a primary communication method or secondary communication method for communicating with the external plant device. In one embodiment, the input is send from the external plant device. In another embodiment the input comprises a schedule indicative of a first predetermined time allotted for the communication method and a second predetermined time allotted for the secondary communication method. If the communication task is a lower power, lower bandwidth communication task, the primary communication method is sufficient for executing the task, and the primary communication system 114 is used for completing the communication task (step 306). Otherwise, if the communication task is a higher power, higher bandwidth communication task, the secondary communication system 116 is activated (step 308) and used to execute the secondary communication method for completing the communication task (step 310). At step 312, the secondary communication system 116 is deactivated to conserve power of the telemetry device.

A method for reducing energy consumption and increasing battery life of telemetry devices by optimizing efficiency of communications between the telemetry devices and other devices in a telemetry operation will now be described. The method comprises providing a telemetry device including at least one primary communication means and at least one secondary communication mean. The at least one primary communication means (e.g., terrestrial radio) implements one or more relatively low power, low bandwidth communication methodologies, and the at least one secondary communication means (e.g., a cell modem) implements one or more relatively high power, high bandwidth communication methodologies.

The telemetry device initially receives or attempts to receive communications from other devices in the telemetry operation on the telemetry device using the at least one primary communication means. The telemetry device processes or attempts to process the received communications on the telemetry device to determine if the low power, low bandwidth communications methodologies are sufficient for communicating with the other devices. In response to determining the low power, low bandwidth communications methodologies are sufficient for communicating with the other devices, the telemetry device continues to communicate with the other devices using the at least one primary communication means. In response to determining the low power, low bandwidth communications methodologies are not sufficient for communicating with other devices, the telemetry device activates the at least one secondary communication means and communicates with the other devices using the secondary communication means. Subsequent to communications with other devices using the secondary communication means, the telemetry device deactivates the secondary communication means to reduce energy usage of the telemetry device.

In accordance with one or more embodiments, secondary communication system 116 serves as a backup in the event primary communication system 114 fails, and vice-versa, thus providing communications redundancy.

Having described the invention in detail, it will be apparent that modifications and variations are possible without departing from the scope of the invention defined in the appended claims.

Embodiments of the present disclosure comprise a special purpose computer including a variety of computer hardware, as described in greater detail herein and are operational with other special purpose computing system environments or configurations even if described in connection with an example computing system environment. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the present disclosure include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices. For purposes of illustration, programs and other executable program components may be shown as discrete blocks. It is recognized, however, that such programs and components reside at various times in different storage components of a computing device, and are executed by a data processor(s) of the device.

In operation, processors, computers, and/or servers may execute the processor-executable instructions (e.g., software, firmware, and/or hardware) such as those illustrated herein to implement aspects of the invention. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the present disclosure.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

Having described the invention in detail, it will be apparent that modifications and variations are possible without departing from the scope of the invention defined in the appended claims.

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above products without departing from the scope of the invention, it is intended that all matter contained in the above description and shown in the accompanying drawings shall be interpreted as illustrative and not in a limiting sense.

Accordingly, the present invention may also be described as follows, optionally in combination with one or more of the above-mentioned features of the present invention: A telemetry communication system is configured for conserving power of telemetry devices of an industrial plant. The telemetry communication system comprises an external plant device and at least one of a telemetry communication device and an outstation. The telemetry communication device and outstation are configured to activate a primary communication system and a secondary communication system. The primary communication system is configured for executing a primary communication method comprising a low power communication methodology and a low bandwidth communication methodology for communicating with the external plant device. The secondary communication system is configured for executing a secondary communication method comprising a high power communication methodology and a high bandwidth communication methodology for communicating with the external plant device. Each of the telemetry communication device and outstation are configured to determine whether to use the primary or secondary communication system for communicating with the external plant device based on an event.

## Claims

1. A telemetry communication system for an industrial plant, the telemetry communication system comprising:
an external plant device; and
an outstation comprising a primary communication system and a secondary communication system, the primary communication system configured for executing a primary communication method comprising at least one of a low power communication methodology and a low bandwidth communication methodology for communicating with the external plant device, the secondary communication system configured for executing a secondary communication method comprising at least one of a high power communication methodology and a high bandwidth communication methodology for communicating with the external plant device.

2. The telemetry communication system of claim 1, wherein the external plant device comprises at least one of a master outstation, a Supervisory Control and Data Acquisition (SCADA) system of the industrial plant, or an additional outstation of the industrial plant.

3. The telemetry communication system as set forth in any one of claims 1-2, wherein the outstation, upon an event, is configured to determine whether to use the primary communication system or secondary communication system to communicate with the external plant device, and wherein the event comprises at least one of the outstation receiving an input from the external plant device, the input being indicative of requiring the primary communication method or secondary communication method, or a schedule indicative of a first predetermined time allotted for the primary communication method and a second predetermined time allotted for the secondary communication method.

4. The telemetry communication system as set forth in any one of claims 1-3, wherein the primary communication system comprises a land-based data radio.

5. The telemetry communication system as set forth in any one of claims 1-4, wherein the secondary communication system comprises a cell modem.

6. The telemetry communication system as set forth in any one of claims 1-5, wherein the primary communication method comprises one of terrestrial radio broadcasting and Long Term Evolution Machine Type Communication (LTE-M).

7. The telemetry communication system as set forth in any one of claims 1-6, wherein the secondary communication method comprises Long Term Evolution (LTE).

8. A telemetry communication device for an industrial plant, the telemetry communication device comprising:
a primary communication system configured for executing a primary communication method comprising at least one of a low power communication methodology and a low bandwidth communication methodology for communicating with an external plant device; and
wherein the telemetry communication device is configured to access a secondary communication system configured for executing a high power communication method comprising at least one of a high power communication methodology and a high bandwidth communication methodology for communicating with the external plant device.

9. The telemetry communication device as set forth in claim 8, wherein the telemetry communication device, upon an event, is configured to determine whether to use the primary communication system or secondary communication system to communicate with the external plant device, and wherein the event comprises the telemetry communication device receiving an input from the external plant device, the input being indicative of requiring the primary communication method or secondary communication method.

10. The telemetry communication device as set forth in any one of claims 8-9, wherein the event comprises a schedule indicative of a first predetermined time allotted for the primary communication method and a second predetermined time allotted for the secondary communication method.

11. Method for communicating with an external plant device of an industrial plant, the method comprising:
receiving, at a telemetry device for the industrial plant, an input indicative of requiring a primary communication method or secondary communication method for communicating with the external plant device;
activating, at the telemetry device, one of a primary communication system comprising the primary communication method or a secondary communication system comprising the secondary communication method, based on the input to communicate with the external plant device.

12. Method as set forth in claim 11, further comprising sending the input at the external plant device.

13. Method as set forth in any one of claims 11-12, wherein the input comprises a schedule indicative of a first predetermined time allotted for the primary communication method and a second predetermined time allotted for the secondary communication method.

14. Method as set forth in any one of claims 11-13, wherein the primary communication method requires less power than the secondary communication method.

15. Method as set forth in any one of claims 11-14, further comprising deactivating the secondary communication system when the primary communication system is activated, and/or wherein a telemetry communication system as set forth in any one of claims 1-7 is used for communicating with the external plant device of the industrial plant, and/or wherein the telemetry device comprises a telemetry communication device as set forth in any one of claims 8-9.
